# EUROPEAN PATENT SPECIFICATION

(11) **EP 3 882 486 B1**
(45) Date of publication and mention of the grant of the patent: **10.06.2026**
(21) Application number: 20275060.0
(22) Date of filing: 20.03.2020
(51) Int. Cl.: F16H 25/20

(54) **DOUBLE NUT STROKE ADJUSTMENT TRAVEL STOP AND METHOD OF ADJUSTING A RESULTING STROKE GAP OF THE TRAVEL STOP ASSEMBLY**
HUBANPASSUNGSANSCHLAG FÜR DOPPELMUTTER UND VERFAHREN ZUR EINSTELLUNG EINES HUBES DER HUBSTOPPERANORDNUNG
BUTÉE D'ARRÊT DE RÉGLAGE DE COURSE À DOUBLE ÉCROU ET MÉTHODE CORRESPONDANTE POUR AJUSTER L'ÉCART DE COURSE RÉSULTANT D'UN DISPOSITIF DE BUTÉE DE FIN DE COURSE

(43) Date of publication of application: 22.09.2021
(73) Proprietor: Goodrich Actuation Systems Limited, Solihull, West Midlands B90 4SS (GB)
(72) Inventor: HAWKSWORTH, Andrew, Moreton, Shropshire TF109DS (GB)
(74) Representative: Casalonga

(56) References cited:
- EP-A2- 3 196 509
- US-A- 3 319 481
- US-A- 5 255 882
- US-A1- 2013 319 147

## Description

### TECHNICAL FIEILD

The present invention relates to an over travel stop unit for actuator valves. In particular, the present invention relates to a travel stop assembly for an actuator and a method of adjustment for a travel stop assembly.

### BACKGROUND

Actuators require accurate travel stop adjustments at ends of the stroke to obtain optimal performance and valve seat life. In normal conditions, an actuator system includes travel stops and components specific to that particular actuator system. For example, the length of the screw will be specific to the stroke requirement of that particular actuator system. There is, therefore, a need for providing an adjustable travel stop unit that can be retrofitted to a range of actuator systems.

US 5 255 882 A relates to a setting device for the control surface of a projectile comprising a linear actuator. In order to limit the axial extent of displacement of the nut relative to the spindle, there are provided two adjustable end stops.

### SUMMARY OF THE INVENTION

According to the invention, there is provided a travel stop assembly for an actuator, as defined in claim 1. The travel stop assembly includes a housing, a shaft provided along a longitudinal axis. The shaft has a first end and a second end. The travel stop assembly also includes a first nut and a second nut provided on the shaft, wherein there is provided a first gap between the first nut and the second nut. The travel stop assembly also includes a second gap provided between the second nut and the first end of the shaft, and means for adjusting the position of the first nut and the second nut such that the second gap is maintained.

The means for adjusting the position of the first nut and the second nut further includes a first rod and a second rod provided at an inner wall of the housing. The first nut includes a first hook and a second hook that are configured to engage the first rod and the second rod. Further, the second nut includes a first hook and a second hook that are configured to engage the first rod and the second rod.

The first rod and second rod may be parallel to the shaft, and the first rod may be opposite the second rod.

The travel stop assembly further includes a first end stop provided at the second end of the shaft, a second end stop provided on one side of the first nut, a third end stop provided at the first end of the shaft, and a fourth end stop provided on one side of the second nut. The second gap may be provided between the third end stop and the fourth end stop.

The second end stop may include at least one protrusion that extends radially away from the surface of the first nut along the longitudinal axis. The fourth end stop may also include at least one protrusion that extends radially away from the surface of the second nut along the longitudinal axis.

The shaft is a threaded screw.

There is also provided an actuator assembly including the travel stop assembly as described above.

There is also provided a method of adjusting a resultant stroke gap of a travel stop assembly, as defined in claim 7, which includes providing a shaft along a longitudinal axis, the shaft having a first end and a second end, providing a first nut and a second nut on the shaft, providing a first gap between the first nut and the second nut, providing a second gap between the second nut and the first end of the shaft, and adjusting the position of the first nut and the second nut such that the second gap is maintained in a housing.

Adjusting the position of the first nut and the second nut further includes providing a first rod and a second rod at an inner wall of the housing, and engaging a first hook and a second hook of the first nut to the first rod and the second rod, and engaging a first hook and a second hook of the second nut to the first rod and the second rod. The first rod and second rod may be parallel to the shaft, and the first rod may be opposite the second rod.

The method further includes providing a first end stop at the second end of the shaft, providing a second end stop on one side of the first nut, providing a third end stop at the first end of the shaft, and providing a fourth end stop on one side of the second nut. The second gap may be provided between the third end stop and the fourth end stop.

Preferably, the second end stop may further comprise at least one protrusion that extends radially away from the surface of the first nut along the longitudinal axis, and the fourth end stop may further comprise at least one protrusion that extends radially away from the surface of the second nut along the longitudinal axis.

### BRIEF DESCRIPTION OF THE DRAWINGS

Figure 1 shows an example of an assembly for travel stop adjustment.
Figure 2 shows an example of the nuts employed in the assembly of Figure 1.
Figure 3 shows a further example of a nut that may be employed in the assembly of Figure 1.

### DETAILED DESCRIPTION

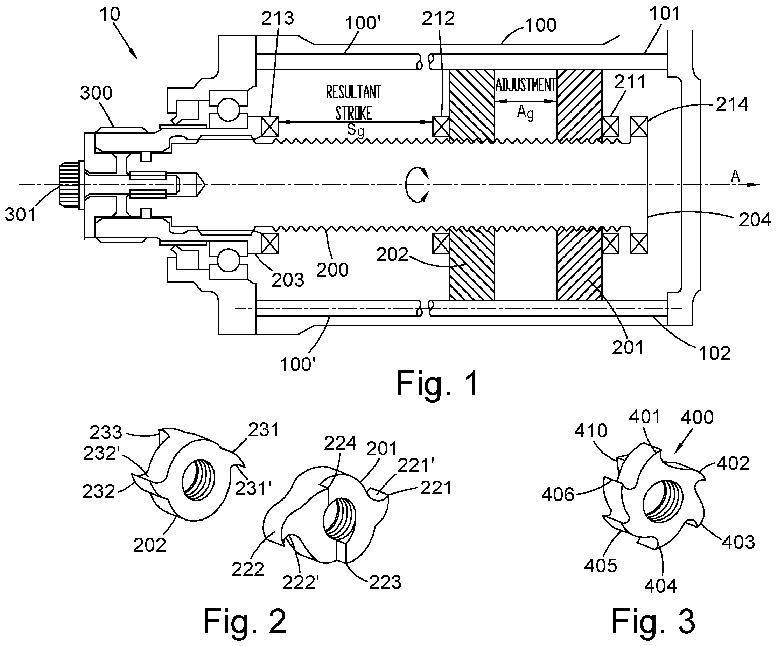

Referring to Figure 1, there is shown an example of an assembly 10. The assembly 10 is known as an over travel stop unit. The assembly 10 includes a housing 100 to house various components that allow for adjustment of the travel stop. As an example shown in Figure 1, the assembly 10 has a longitudinal axis A running through the centre of the assembly 10 and the housing 100 is provided about this longitudinal axis A. As shown in Figure 1, there is provided a threaded screw 200 along the longitudinal axis A of the assembly 10. A first nut 201 and a second nut 202 are received on the threaded screw 200. An adjustment gap A_{g} is formed between the first nut 201 and the second nut 202. This may be done manually by an engineer before incorporating the components for the assembly 10 in the housing 100.

A first rod 101 is provided at an inner wall 100' of the housing 100. The first rod 101 runs parallel to the threaded screw 200. A second rod 102 is provided at the inner wall 100' of the housing 100, opposite the first rod 101. In the examples shown in Figure 1, the first rod 101 and the second rod 102 are cylindrical. Of course, it is envisaged that other geometries could be used as well to allow the first nut 201 and second nut 202 to engage with the first rod 101 and second rod 102, as described in more detail below.

As shown in Figure 1, the threaded screw 200 has a first end 203 and a second end 204. Provided at the second end 204 of the threaded screw 200 is a first end stop 214. Provided on one side of the first nut 201 is a second end stop 211 that faces the first end stop 214 (i.e., the second end stop 211 is to the right hand side of the first nut 201). Provided at the first end 203 of the threaded screw 200 is a third end stop 213. Provided on one side of the second nut 202 is a fourth end stop 212 that faces the third end stop 213 (i.e., the fourth end stop 212 is provided on the left hand side of the second nut 202). The gap between the third end stop 213 and the fourth end stop 212 is designated by the reference S_{g} and refers to the resultant stroke gap. Before the housing 100 is applied to an actuator assembly (not shown), a user can adjust the resultant stroke gap S_{g} by placing the first nut 201 and second nut 202 at the desired positions on the threaded screw 200. The user can then engage the threaded screw 200 in the housing 100. An axial screw 301 is applied to the threaded screw 200 to maintain the position of the threaded screw 200 in the housing 100. There is also provided an adjustment means 300, which may be in the form of an exposed outer spline of the threaded screw 200. This is described in more detail below.

Referring to Figure 2, the first nut 201 and the second nut 202 are shown. As can be seen in Figure 2, the first nut 201 includes a first hook 221 that extends radially from the overall surface of the first nut 201. The first nut 201 includes also a second hook 222 that also extends radially from the overall surface of the first nut 201. The first hook 221 of the first nut 201, therefore, provides a first hook surface 221' that can interact with one of the first rod 101 or the second rod 102 (as shown in Figure 1), in use. The first hook surface 221' is perpendicular to the overall surface of the first nut 201 and is configured to receive one of the first rod 101 or the second rod 102 (e.g. it includes a recess (not shown) that is sized and shaped to receive either the first rod 101 or the second rod 102). The second hook 222 also provides a second hook surface 222' that can interact with one of the first rod 101 or the second rod 102, in use. The second hook surface 222' is perpendicular to the overall surface of the first nut 201 and is configured to receive one of the first rod 101 or the second rod 102 (e.g. it includes a recess (not shown) that is sized and shaped to receive either the first rod 101 or the second rod 102).

As also shown in Figure 2, the first nut 201 may have a first protrusion 223 and a second protrusion 224 that extend radially from the surface of the first nut 201 along the longitudinal axis. The first protrusion 223 and second protrusion 224 may therefore act as the second end stop 211 shown in Figure 1.

As can also be seen in Figure 2, the second nut 202 includes a first hook 231 that extends radially from the surface of the second nut 202. The second nut 202 also includes a second hook 232 that also extends radially from the surface of the second nut 202. The first hook 231 of the second nut 202, therefore, provides a first hook surface 231' that can interact with one of the first rod 101 or the second rod 102 (as shown in Figure 1), in use. The first hook surface 231' is perpendicular to the overall surface of the second nut 202 and is configured to receive one of the first rod 101 or the second rod 102 (e.g. it includes a recess (not shown) that is sized and shaped to receive either the first rod 101 or the second rod 102). The second hook 232 also provides a second hook surface 232' that can interact with one of the first rod 101 or the second rod 102, in use. The second hook surface 232' is perpendicular to the overall surface of the second nut 202 and is configured to receive one of the first rod 101 or the second rod 102 (e.g. it includes a recess (not shown) that is sized and shaped to receive either the first rod 101 or the second rod 102).

As also shown in Figure 2, the second nut 202 may have a first protrusion 233 and a second protrusion (not shown) that extend radially from the surface of the first nut 201 along the longitudinal axis. The first protrusion 233 and second protrusion (not shown) may therefore act as the fourth end stop 212 shown in Figure 1.

As shown in Figure 2, the first nut 201 and the second nut 202 are arranged such that protrusions 223, 224 and 233 are facing away from each other. In other words, when the first nut 201 and the second nut 202 are arranged on the threaded screw 200, they are equal parts inversed along the longitudinal axis.

Referring now to both Figures 1 and 2, the first nut 201 and second nut 202 may be introduced on to the threaded screw 200 by the user. When the travel stop unit, or assembly 10, is to be fitted to an actuator system, the user may first determine and set the position of the first nut 201 and the second nut 202 to result in the adjustment gap A_{g} (i.e., the space between the first nut 201 and the second nut 202). Once the first nut 201 and the second nut 202 have been placed in the assembly 10, the user may then set the resultant stroke gap, S_{g}, by turning the threaded screw 200 with the adjustment means 300. As the threaded screw 200 turns, the first hook surface 221' of the first nut 201 may contact one of either the first rod 101 or the second rod 102. The second hook surface 222' of the first nut 201 may then contact the other of either the first rod 101 or the second rod 102 (i.e., the rod that is not being contacted by the first hook surface 221' of the first nut 201). Similarly, as the threaded screw 200 turns, the first hook surface 231' of the second nut 202 may also contact either one of the first rod 101 or the second rod 102. The second hook surface 232' of the second nut 202 may then contact the other of either the first rod 101 or the second rod 102 (i.e., the rod that is not being contacted by the first hook surface 231' of the second nut 202).

When the first hook surfaces 221' and 231', and the second hook surfaces 222' and 232', of the first and second nut 201 and 202 are engaged with the first rod 101 and the second rod 102, the first nut 201 and the second nut 202 are then set in position, which results in the resultant stroke gap S_{g}.

Figure 3 shows an example of an alternative nut 400 that could replace the first nut 201 and second nut 202 described above. In the example shown in Figure 3, there is provided a nut 400 (which could form the first nut 201 and the second nut 202 described above) that may include a first hook 401, a second hook 402, a third hook 403, a fourth hook 404, a fifth hook 405 and a sixth hook 406. In this way, the user may have smaller turns to engage the first rod 101 and the second rod 102, which allows for a more accurate adjustment of the resultant stroke gap S_{g}. It is appreciated that the nut 400, in this example, includes six hooks, but that any number of hooks of more than two could replace the hooks described in relation to the first nut 201 and second nut 202 in Figure 2. There may also be provided a first protrusion 410 on the alternative nut 400 that acts as an end stop in relation to the protrusions described with reference to Figure 2.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims.

## Claims

1. A travel stop assembly (10) for an actuator, comprising:
a housing (100);
a threaded screw (200) provided along a longitudinal axis (A), the threaded screw (200) having a first end (203) and a second end (204);
a first nut (201) and a second nut (202) provided on the threaded screw (200), wherein there is provided a first gap (A_{g}) between the first nut (201) and the second nut (202);
a second gap (S_{g}) provided between the second nut (202) and the first end (203) of the threaded screw (200);
a first end stop (214) provided at the second end (204) of the threaded screw (200);
a second end stop (211) provided on one side of the first nut (201);
a third end stop (213) provided at the first end (203) of the shaft (200);
a fourth end stop (212) provided on one side of the second nut (202)
means for adjusting the position of the first nut (201) and the second nut (202) such that the second gap (S_{g}) is maintained, wherein the means for adjusting the position of the first nut (201) and the second nut (202) is **characterized by**:
a first rod (101) and a second rod (102) provided at an inner wall (100') of the housing (100);
wherein the first nut (201) includes a first hook (221) and a second hook (222) that are configured to engage the first rod (101) and the second rod (102); and
wherein the second nut (202) includes a first hook (231) and a second hook (232) that are configured to engage the first rod (101) and the second rod (102).

2. The travel stop assembly of claim 1, wherein the first rod (101) and second rod (102) are parallel the shaft (200), and wherein the first rod (101) is opposite the second rod (102).

3. The travel stop assembly any preceding claim, wherein the second gap (S_{g}) is provided between the third end stop (213) and the fourth end stop (212).

4. The travel stop assembly of any preceding claim, wherein the second end stop (211) comprises at least one protrusion that extends radially away from the surface of the first nut (201) along the longitudinal axis.

5. The travel stop assembly of any preceding claim 3-5, wherein the fourth end stop (212) comprises at least one protrusion that extends radially away from the surface of the second nut (202) along the longitudinal axis.

6. An actuator assembly including a travel stop assembly as claimed in any preceding claim.

7. A method of adjusting a resultant stroke gap of a travel stop assembly, the method comprising:
providing a threaded screw (200) along a longitudinal axis (A), the threaded screw (200) having a first end (203) and a second end (204);
providing a first nut (201) and a second nut (202) on the threaded screw (200);
providing a first gap (A_{g}) between the first nut (201) and the second nut (202);
providing a second gap (S_{g}) between the second nut (202) and the first end (203) of the threaded screw (200);
providing a first end stop (214) at the second end (204) of the threaded screw (200);
providing a second end stop (211) on one side of the first nut (201);
providing a third end stop (213) at the first end (203) of the shaft (200);
providing a fourth end stop (212) on one side of the second nut (202); and
adjusting the position of the first nut (201) and the second nut (202) such that the second gap (S_{g}) is maintained in a housing (100), wherein adjusting the position of the first nut (201) and the second nut (202), is **characterized by**:
providing a first rod (101) and a second rod (102) at an inner wall (100') of the housing (100), and engaging a first hook (221) and a second hook (222) of the first nut (201) to the first rod (101) and the second rod (102); and
engaging a first hook (231) and a second hook (232) of the second nut (202) to the first rod (101) and the second rod (102).

8. The method of claim 7, wherein the first rod (101) and second rod (102) are parallel the shaft (200), and wherein the first rod (101) is opposite the second rod (102).

9. The method of claim 7 or 8, wherein the second gap (S_{g}) is provided between the third end stop (213) and the fourth end stop (212).

10. The method of any of claims 7, 8 or 9, wherein the second end stop (211) comprises at least one protrusion that extends radially away from the surface of the first nut (201) along the longitudinal axis, and wherein the fourth end stop (212) comprises at least one protrusion that extends radially away from the surface of the second nut (202) along the longitudinal axis.

## Patentansprüche

1. Weganschlagbaugruppe (10) für einen Aktuator, umfassend:
ein Gehäuse (100);
eine Gewindeschraube (200), die entlang einer Längsachse (A) bereitgestellt ist, wobei die Gewindeschraube (200) ein erstes Ende (203) und ein zweites Ende (204) aufweist;
eine erste Mutter (201) und eine zweite Mutter (202), die auf der Gewindeschraube (200) bereitgestellt sind, wobei ein erster Spalt (A_{g}) zwischen der ersten Mutter (201) und der zweiten Mutter (202) bereitgestellt ist;
einen zweiten Spalt (S_{g}), der zwischen der zweiten Mutter (202) und dem ersten Ende (203) der Gewindeschraube (200) bereitgestellt ist;
einen ersten Endanschlag (214), der an dem zweiten Ende (204) der Gewindeschraube (200) bereitgestellt ist;
einen zweiten Endanschlag (211), der auf einer Seite der ersten Mutter (201) bereitgestellt ist;
einen dritten Endanschlag (213), der an dem ersten Ende (203) der Welle (200) bereitgestellt ist;
einen vierten Endanschlag (212), der auf einer Seite der zweiten Mutter (202) bereitgestellt ist,
Mittel zum Einstellen der Position der ersten Mutter (201) und der zweiten Mutter (202), so dass der zweite Spalt (S_{g}) erhalten bleibt, wobei das Mittel zum Einstellen der Position der ersten Mutter (201) und der zweiten Mutter (202) **gekennzeichnet ist durch**:
eine erste Stange (101) und eine zweite Stange (102), die an einer Innenwand (100') des Gehäuses (100) bereitgestellt sind;
wobei die erste Mutter (201) einen ersten Haken (221) und einen zweiten Haken (222) einschließt, die so eingerichtet sind, dass sie in die erste Stange (101) und die zweite Stange (102) eingreifen; und
wobei die zweite Mutter (202) einen ersten Haken (231) und einen zweiten Haken (232) einschließt, die so eingerichtet sind, dass sie in die erste Stange (101) und die zweite Stange (102) eingreifen.

2. Weganschlagbaugruppe nach Anspruch 1, wobei die erste Stange (101) und die zweite Stange (102) parallel zu der Welle (200) sind, und wobei die erste Stange (101) der zweiten Stange (102) gegenüberliegt.

3. Weganschlagbaugruppe nach einem der vorhergehenden Ansprüche, wobei der zweite Spalt (S_{g}) zwischen dem dritten Endanschlag (213) und dem vierten Endanschlag (212) bereitgestellt ist.

4. Weganschlagbaugruppe nach einem der vorhergehenden Ansprüche, wobei der zweite Endanschlag (211) mindestens einen Vorsprung umfasst, der sich radial von der Oberfläche der ersten Mutter (201) entlang der Längsachse erstreckt.

5. Weganschlagbaugruppe nach einem der vorhergehenden Ansprüche 3 bis 5, wobei der vierte Endanschlag (212) mindestens einen Vorsprung umfasst, der sich radial von der Oberfläche der zweiten Mutter (202) entlang der Längsachse erstreckt.

6. Aktuatorbaugruppe, die eine Weganschlagbaugruppe nach einem der vorhergehenden Ansprüche einschließt.

7. Verfahren zum Einstellen eines resultierenden Hubspalts einer Weganschlagbaugruppe, das Verfahren umfassend:
Bereitstellen einer Gewindeschraube (200) entlang einer Längsachse (A), wobei die Gewindeschraube (200) ein erstes Ende (203) und ein zweites Ende (204) aufweist;
Bereitstellen einer ersten Mutter (201) und einer zweiten Mutter (202) auf der Gewindeschraube (200);
Bereitstellen eines ersten Spalts (A_{g}) zwischen der ersten Mutter (201) und der zweiten Mutter (202);
Bereitstellen eines zweiten Spalts (S_{g}) zwischen der zweiten Mutter (202) und dem ersten Ende (203) der Gewindeschraube (200);
Bereitstellen eines ersten Endanschlags (214) am zweiten Ende (204) der Gewindeschraube (200);
Bereitstellen eines zweiten Endanschlags (211) auf einer Seite der ersten Mutter (201);
Bereitstellen eines dritten Endanschlags (213) an dem ersten Ende (203) der Welle (200);
Bereitstellen eines vierten Endanschlags (212) auf einer Seite der zweiten Mutter (202); und
Einstellen der Position der ersten Mutter (201) und der zweiten Mutter (202), so dass der zweite Spalt (S_{g}) in einem Gehäuse (100) erhalten bleibt, wobei das Einstellen der Position der ersten Mutter (201) und der zweiten Mutter (202) **gekennzeichnet ist durch**:
Bereitstellen einer ersten Stange (101) und einer zweiten Stange (102) an einer Innenwand (100') des Gehäuses (100), und Eingreifen eines ersten Hakens (221) und eines zweiten Hakens (222) der ersten Mutter (201) in die erste Stange (101) und die zweite Stange (102); und
Eingreifen eines ersten Hakens (231) und eines zweiten Hakens (232) der zweiten Mutter (202) an der ersten Stange (101) und der zweiten Stange (102).

8. Verfahren nach Anspruch 7, wobei die erste Stange (101) und die zweite Stange (102) parallel zur Welle (200) sind, und wobei die erste Stange (101) der zweiten Stange (102) gegenüberliegt.

9. Verfahren nach Anspruch 7 oder 8, wobei der zweite Spalt (S_{g}) zwischen dem dritten Endanschlag (213) und dem vierten Endanschlag (212) bereitgestellt ist.

10. Verfahren nach einem der Ansprüche 7, 8 oder 9, wobei der zweite Endanschlag (211) mindestens einen Vorsprung umfasst, der sich radial von der Oberfläche der ersten Mutter (201) entlang der Längsachse erstreckt, und wobei der vierte Endanschlag (212) mindestens einen Vorsprung umfasst, der sich radial von der Oberfläche der zweiten Mutter (202) entlang der Längsachse erstreckt.

## Revendications

1. Ensemble limiteur de course (10) pour un actionneur, comprenant :
un logement (100) ;
une vis filetée (200) disposée le long d'un axe longitudinal (A), la vis filetée (200) présentant une première extrémité (203) et une seconde extrémité (204) ; un premier écrou (201) et un second écrou (202) disposés sur la vis filetée (200), dans lequel un premier écart (A_{g}) est ménagé entre le premier écrou (201) et le second écrou (202) ;
un second écart (S_{g}) ménagé entre le second écrou (202) et la première extrémité (203) de la vis filetée (200) ;
une première butée (214) disposée sur la seconde extrémité (204) de la vis filetée (200) ;
une deuxième butée (211) disposée sur un côté du premier écrou (201) ;
une troisième butée (213) disposée sur la première extrémité (203) de l'arbre (200) ;
une quatrième butée (212) disposée sur un côté du second écrou (202)
des moyens de réglage de la position du premier écrou (201) et du second écrou (202), de sorte que le second écart (S_{g}) soit maintenu, dans lequel les moyens de réglage de la position du premier écrou (201) et du second écrou (202) sont **caractérisés par** :
une première tige (101) et une seconde tige (102) disposées au niveau d'une paroi interne (100') du logement (100) ;
dans lequel le premier écrou (201) inclut un premier crochet (221) et un second crochet (222) qui sont configurés pour venir en prise avec la première tige (101) et la seconde tige (102) ; et
dans lequel le second écrou (202) inclut un premier crochet (231) et un second crochet (232) qui sont configurés pour venir en prise avec la première tige (101) et la seconde tige (102).

2. Ensemble limiteur de course selon la revendication 1, dans lequel la première tige (101) et la seconde tige (102) sont parallèles à l'arbre (200), et dans lequel la première tige (101) est opposée à la seconde tige (102).

3. Ensemble limiteur de course selon une quelconque revendication précédente, dans lequel le second écart (S_{g}) est ménagé entre la troisième butée (213) et la quatrième butée (212).

4. Ensemble limiteur de course selon une quelconque revendication précédente, dans lequel la deuxième butée (211) comprend au moins une saillie qui s'étend radialement à l'écart de la surface du premier écrou (201) le long de l'axe longitudinal.

5. Ensemble limiteur de course selon une quelconque revendication 3-5 précédente, dans lequel la quatrième butée (212) comprend au moins une saillie qui s'étend radialement à l'écart de la surface du second écrou (202) le long de l'axe longitudinal.

6. Ensemble actionneur incluant un ensemble limiteur de course selon une quelconque revendication précédente.

7. Procédé de réglage d'un écart de course résultant d'un ensemble limiteur de course, le procédé comprenant :
la fourniture d'une vis filetée (200) le long d'un axe longitudinal (A), la vis filetée (200) présentant une première extrémité (203) et une seconde extrémité (204) ;
la fourniture d'un premier écrou (201) et d'un second écrou (202) sur la vis filetée (200) ;
la fourniture d'un premier écart (A_{g}) entre le premier écrou (201) et le second écrou (202) ;
la fourniture d'un second écart (S_{g}) entre le second écrou (202) et la première extrémité (203) de la vis filetée (200) ;
la fourniture d'une première butée (214) sur la seconde extrémité (204) de la vis filetée (200) ;
la fourniture d'une deuxième butée (211) sur un côté du premier écrou (201) ;
la fourniture d'une troisième butée (213) sur la première extrémité (203) de l'arbre (200) ;
la fourniture d'une quatrième butée (212) sur un côté du second écrou (202) ; et
le réglage de la position du premier écrou (201) et du second écrou (202), de sorte que le second écart (S_{g}) soit maintenu dans un logement (100), dans lequel le réglage de la position du premier écrou (201) et du second écrou (202) est **caractérisé par** :
la fourniture d'une première tige (101) et d'une seconde tige (102) au niveau d'une paroi interne (100') du logement (100), et la mise en prise d'un premier crochet (221) et d'un second crochet (222) du premier écrou (201) avec la première tige (101) et la seconde tige (102) ; et
la mise en prise d'un premier crochet (231) et d'un second crochet (232) du second écrou (202) avec la première tige (101) et la seconde tige (102).

8. Procédé selon la revendication 7, dans lequel la première tige (101) et la seconde tige (102) sont parallèles à l'arbre (200), et dans lequel la première tige (101) est opposée à la seconde tige (102).

9. Procédé selon la revendication 7 ou 8, dans lequel le second écart (S_{g}) est ménagé entre la troisième butée (213) et la quatrième butée (212).

10. Procédé selon l'une quelconque des revendications 7, 8 ou 9, dans lequel la deuxième butée (211) comprend au moins une saillie qui s'étend radialement à l'écart de la surface du premier écrou (201) le long de l'axe longitudinal, et dans lequel la quatrième butée (212) comprend au moins une saillie qui s'étend radialement à l'écart de la surface du second écrou (202) le long de l'axe longitudinal.
